Europäisches Patentamt

(19) European Patent Office

Office européen des brevets

(11) Publication number : **0 522 818 A1**

## (12) EUROPEAN PATENT APPLICATION

(21) Application number : 92306198.0

(22) Date of filing : 06.07.92

(51) Int. Cl.⁵ : **H05C 1/06, A22B 3/06**

(30) Priority : 08.07.91 GB 9114696

(43) Date of publication of application :
13.01.93 Bulletin 93/02

(84) Designated Contracting States :
AT BE CH DE DK ES FR GB GR IT LI LU NL PT
SE

(71) Applicant : **MEAT & LIVESTOCK COMMISSION**
P.O. Box 44, Winterhill House
Snowdown Drive, Milton Keynes MK6 1AX
(GB)

(72) Inventor : **Daly, Clyde Charles**
8A Boyces Avenue, Clifton
Bristol BS8 4AA (GB)
Inventor : **Simmons, Nicola Jane**
Warwick Cottage, Orchard Lane, Shouldam
King's Lynn, Norfolk PE33 0BL (GB)

(74) Representative : **Skone James, Robert
Edmund**
GILL JENNINGS & EVERY 53-64 Chancery
Lane
London WC2A 1HN (GB)

(54) Method and apparatus for generating electrical waveforms.

(57) A method and apparatus for generating an electrical waveform for application to an animal so as at least to stun the animal. In one example, the apparatus comprises an electrical waveform generator (1-6) for generating bursts of relatively high frequency bipolar electrical energy (10), the bursts being generated at a relatively low frequency ; and, between the bursts, for generating a DC level (11), the DC level alternating between positive and negative values. In another example, the apparatus comprises an electrical waveform generator (1-6) for generating bursts of relatively high frequency and for inverting the polarity of the waveform at a relatively low frequency.

## Fig.1.

MAINS
240 VOLTS

The invention relates to methods and apparatus for generating electrical waveforms for use in stunning, or stunning and killing animals.

Stun-kill methods of electrical stunning offer two principal advantages in electrical stunning of livestock. Firstly the animals are killed during the stun, and therefore the danger of recovery should exsanguination be delayed or incorrectly carried out is avoided. Secondly, because the stunning current is passed through the body of the animal during the stun, post-stun convulsions are minimised or prevented altogether.

Stun-kill methods are typically applied as head-to-back stunning, since this method of application offers the greatest reduction in post-stun convulsions. However, in this method a 50 Hz stunning current produces an unacceptable amount of vertebral fractures and intramuscular blood splash.

One example of a previous approach is described in US-A-3012271. This approach makes use of uni-polar pulses of current but these waveforms result in a reduced effectiveness of stunning.

EP-A-0307031 describes an approach which requires the use of two electrical waveforms. Firstly, a stunning current is generated to stun the animal followed by a relaxation current which involves the use of intermittent bursts of high frequencies. It is particularly disadvantageous to have to use two separate waveforms.

In accordance with one aspect of the present invention, a method of generating an electrical waveform for application to an animal so as at least to stun the animal comprises generating bursts of relatively high frequency, bipolar electrical energy, the bursts being generated at a relatively low frequency; and, between the bursts, generating a DC level, the DC level alternating between positive and negative values.

In accordance with a second aspect of the present invention, apparatus for generating an electrical waveform for application to an animal so as at least to stun the animal comprises electrical waveform generating means for generating bursts of relatively high frequency, bipolar electrical energy, the bursts being generated at a relatively low frequency; and, between the bursts, for generating a DC level, the DC level alternating between positive and negative values.

This type of electrical waveform can be used preferably in stun methods and overcomes the problems outlined above. Typically the waveform is applied to the head only of the animal. Thus, the electrical waveform provides a component at a high frequency and includes a low frequency component which induces cardiac arrest. This reduces general carcase damage such as vertebral fractures and intramuscular haemorrhage which occur with known methods, but in particular reduces the severity of post-stun convulsions.

Thus, it provides the benefits to meat quality of a continuous high frequency waveform (ie without any DC components), but controls the severe post-stun convulsions which are associated with its use.

In accordance with a third aspect of the present invention, a method of generating an electrical waveform for application to an animal so as at least to stun the animal comprises generating bursts of relatively high frequency, unipolar electrical energy; and inverting the polarity of the waveform at a relatively low frequency.

In accordance with a fourth aspect of the present invention, apparatus for generating an electrical waveform for application to an animal so as at least to stun the animal comprises electrical waveform generating means for generating bursts of relatively high frequency, unipolar electrical energy; and for inverting the polarity of the waveform at a relatively low frequency.

This waveform is particularly useful in stun-kill applications and although it is made up of unipolar pulses, its function depends upon the polarity inversion and, since in its entirety it contains pulses both negative and positive-going in equal numbers, it is a symmetrically bipolar waveform, which distinguishes it from US-A-3012271.

The advantage of a unipolar waveform is that a change in the polarity of an applied waveform produces a response far greater than an equivalent voltage change which does not alter the polarity.

Typical values for the high frequency are between 5 and 10 KHz, typically 7 KHz while the low frequency component is about 1000 times lower, preferably in the range 15-30 Hz, typically 25 Hz. The duration of each high frequency burst is chosen empirically but is preferably in the range 1-5 ms, typically 2.5 msec. A duty cycle of substantially 50% is preferred.

We have found that summation of the contractions of skeletal muscle becomes a significant factor in the total intensity of contraction above 25 Hz, and becomes fully tetanised around 50 Hz. Below 25 Hz, each voltage change produces a discreet contraction and relaxation.

The invention is particularly suitable for use in stunning livestock, such as pigs, cattle, poultry and sheep.

Examples of apparatus and methods according to the invention will now be described with reference to the accompanying drawings, in which:-

Figure 1 is a schematic, circuit diagram of the apparatus;

Figure 2 illustrates one example of a suitable waveform; and,

Figure 3 illustrates another example of a suitable waveform.

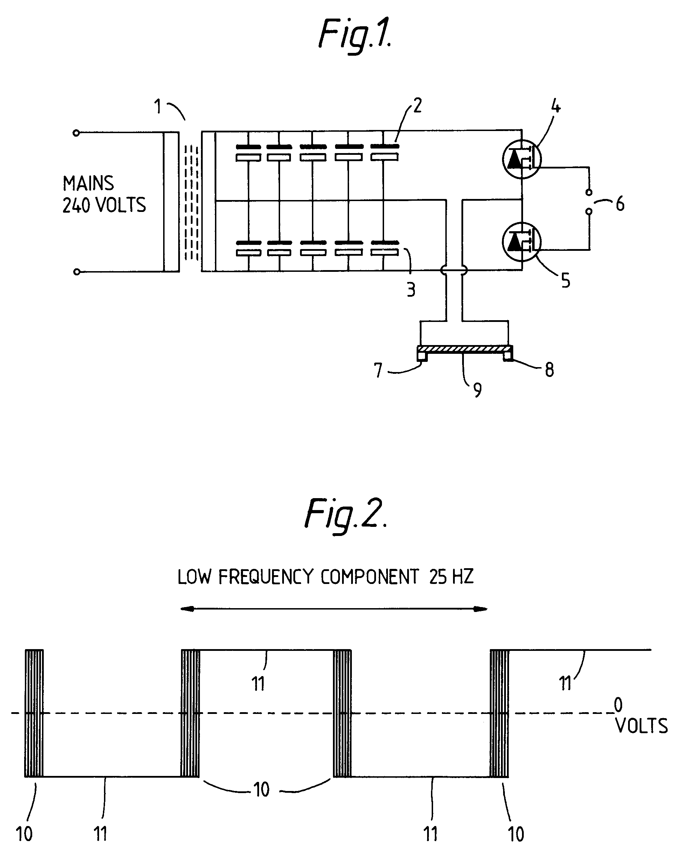

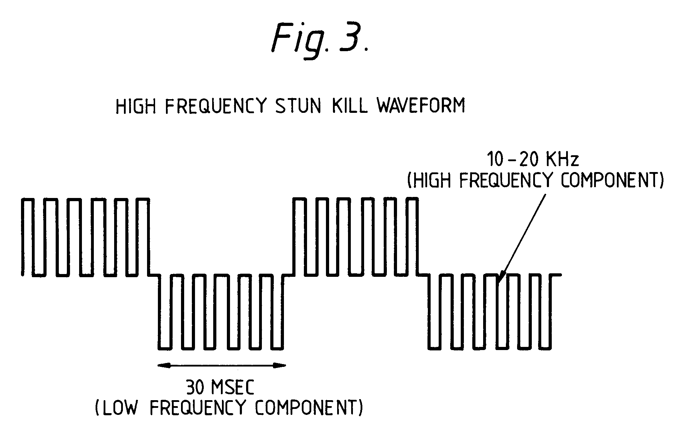

The apparatus shown in Figure 1 is for use in head only stunning of animals, particularly pigs, when used with the Figure 2 waveform, and head-to-back stun-killing of animals when used with the Figure 3 waveform and is of conventional form. The apparatus comprises an isolation transformer 1 coupled in use to a 240 volt main supply. The secondary of the transformer 1 is connected in parallel to sets of capacitor banks 2, 3 providing positive and negative DC voltage levels. The capacitor banks 2, 3 are connected in series to a pair of power switching transistors 4, 5 controlled by an input control voltage 6.

The common connections between the capacitor banks 2, 3 and between the power switching transistors 4, 5 are connected to respective head electrodes 7, 8 mounted to a support 9. In use, the head electrodes 8, 7 are placed against the head of the animal and an electrical signal applied.

In order to define a suitable electrical signal, the response of different biological tissues to increases in the frequency of an externally applied voltage was investigated.

The three tissue types which needed to be characterised were the central nervous system, to ensure effective stunning; skeletal muscle, to prevent excessively powerful contractions; and cardiac muscle, to produce cardiac arrest. The maximum stimulation frequencies for each tissue type are shown in Table 1.

### TABLE 1

| Tissue Type | Maximum Stimulation Frequency |
|---|---|
| CNS | >20000 Hz |
| Skeletal Muscle | 1000-1500 Hz |
| Cardiac Muscle | 500 Hz |

A waveform of the type shown in Figure 2 was developed having a high frequency component 10 of between 5 and 10 KHz, preferably 7 KHz, and a low frequency component 11 of 25 Hz leading to a high frequency pulse duration of 2.5 msec. Typical root mean square (RMS) currents of 1 amp in sheep and 1.3 amps in pigs are used. RMS represents the average current flow during the stun. This waveform was developed for the following reasons:

1. Cardiac arrest is produced by the low frequency component of 25 Hz. This frequency has been found to be as effective as 50 Hz in producing ventricular fibrillation. Cardiac muscle membrane is only weakly stimulated by high frequency activity. However, the low frequency reversal of polarity of the intermediate DC level produces depolarisation of cardiac muscle which leads to ventricular fibrillation.

2. The intensity of skeletal muscular contractions is controlled by two factors. Firstly, direct muscular stimulation by the stunning current is minimised by using a high frequency component above the threshold to which this tissue type can respond. Secondly, like cardiac muscle, skeletal will respond to the low frequency component, but this is minimised by keeping the frequency of these responses below that which produces summation of skeletal muscle contractions and thus avoiding the damaging effects of tetanic contractions.

3. The effects of the waveform on the CNS must be considered in terms of its effects on producing insensibility, and on CNS mediated intensity of skeletal muscular contraction.

We have found that the minimum amount of voltage/current required to produce an epileptic state increases as the frequency increases. Thus at 10 KHz, about twice as much voltage/current is needed to stun an animal as compared with 50 Hz. However, the minimum needed to stun using the new waveform is approximately equivalent to 50 Hz, in spite of the high frequency component. This is attributed to the presence of the low frequency component.

CNS mediated skeletal muscular contractions are minimised because the high frequency component has been shown to reduce the force of contraction by in excess of 80%.

The waveform can be adjusted to meet the preferences of the user. By increasing the duration of the high frequency component, the severity of the muscular contractions can be reduced, thereby providing some improvements in carcass quality, at the cost of increased post-stun convulsions. The values described in Figure 2 represent the best compromise between the conflicting requirements. Table 2 describes the effects of the new waveform on the incidence of shoulder bruising, an index of the over-all carcass quality damage produced by electrical stunning.

## Table 2

|  | Severity (%) | NONE | MILD | SEVERE |
|---|---|---|---|---|
| 50 Hz |  | 0 | 27 | 73 |
| 1500 Hz |  | 78 | 22 | 0 |
| New waveform |  | 69 | 27 | 4 |

Figure 3 illustrates a waveform made up of unipolar, high frequency electrical energy (5-10 KHz) whose polarity reverses at low frequency (15-30 Hz). Two factors contribute to the development of the waveform. Firstly, by using a unipolar waveform, the biological response is reduced, since it has been found that the response to a bipolar applied voltage is far greater than an equivalent voltage presented as a unipolar waveform. Secondly, muscular contractions are reduced by avoiding summation of the response, since it has been found that summation begins at frequency above 25 Hz and becomes fully tetanised at around 50 Hz.

This waveform was developed for similar reasons to the Figure 2 example. In addition, the duration of the first pulse following inversion of the polarity is kept very short, which again minimises the intensity of the contraction. At 10 KHz, the pulse duration is 100 microseconds.

In a typical example of the Figure 3 waveform, the high frequency is in the range 10-20 KHz while each unipolar burst lasts for about 30 msec.

Extensive tests have been carried out on the effects of this waveform on blood splash and broken bones. The results are shown in the Tables 3 and 4. In Table 3, the first line indicates a conventional method and the second a method using the Figure 3 waveform.

## TABLE 3

### The Incidence of Broken Backs Following head to back stunning (%)

| N | Hz | Voltage | Broken Backs (%) |
|---|---|---|---|
| 50 | 50 | 250 | 52 |
| 490 | 16.6/15K | 220 | 0 |

N is the number of pigs in the treatment group.

## TABLE 4

### The Effect of Tong Position and Frequency On Overall Carcass Blood Splash Assessment

| Tong Position | Hz | Voltage (RMS) | Mean Carcass Blood Splash Score |
|---|---|---|---|
| Head Only | 50 | 250 | 1.73 |
| Head to Back | 50 | 250 | 2.35 |
| Head to Back | 16.6/15K | 220 | 0.89 |

In Table 4, the first two lines indicate conventional methods and the last line a method according to the invention.

Each animal was graded as either 0 (no blood splash), 1 (very mild blood splash), 2 economically significant blood splash) or 3 (very severe blood splash); the values for each pig in a treatment group were then averaged to derive the Mean Carcass Blood Splash Score.

Effects on the pH of meat have not yet been fully investigated, but preliminary observations have suggested a beneficial effect compared to head-to-back 50 Hz stunning.

With both waveforms (Figures 2 and 3), the voltage range must be sufficient to meet government recommendations/regulations. For example, those from the European Commission require a minimum of 1.0, 1.3 and 2.5 amps for sheep, pigs and cattle respectively. These current levels can be met by 200-300 volts in the cases of sheep and pork/bacon weight pigs, and 300 volts will be needed for adult pigs and cattle. The total range should therefore be 200-400 volts. The values for both the minimum currents and the voltage range described are the root mean squared (RMS) values.

The minimum current needed for the stun-kill waveform (Figure 3), designed specifically for pigs, is 1.3 amps, and the voltage range should be limited to between 250 and 300 volts.

## Claims

1. A method of generating an electrical waveform for application to an animal so as at least to stun the animal, the method comprising generating bursts of relatively high frequency, bipolar electrical energy, the bursts being generated at a relatively low frequency; and, between the bursts, generating a DC level, the DC level alternating between positive and negative values.

2. A method of generating an electrical waveform for application to an animal so as at least to stun the animal, the method comprising generating bursts of relatively high frequency, unipolar electrical energy; and inverting the polarity of the waveform at a relatively low frequency.

3. A method according to claim 1 or claim 2, wherein the high frequency lies in the range 5-10 KHz.

4. A method according to claim 3, wherein the high frequency is substantially 7 KHz.

5. A method according to any of the preceding claims, wherein the low frequency is in the range 15-30 Hz.

6. A method according to claim 5, wherein the low frequency is substantially 25 Hz.

7. A method according to any of the preceding claims, wherein the waveform has a duty cycle of substantially 50%.

8. A method according to any of the preceding claims, wherein each high frequency pulse has a duration in the range 1-5 ms, preferably substantially 2.5 ms.

9. Apparatus for generating an electrical waveform for application to an animal so as at least to stun the animal, the apparatus comprising electrical waveform generating means for generating bursts of relatively high frequency, bipolar electrical energy, the bursts being generated at a relatively low frequency; and, between the bursts, for generating a DC level, the DC level alternating between positive and negative values.

10. Apparatus for generating an electrical waveform for application to an animal so as at least to stun the animal, the apparatus comprising electrical waveform generating means for generating bursts of relatively high frequency, unipolar, electrical energy; and for inverting the polarity of the waveform at a relatively low frequency.

11. Apparatus according to claim 9 or claim 10, wherein the electrical waveform generating means generates a waveform with a frequency in the range 5-10 KHz.

12. Apparatus according to claim 11, wherein the high frequency is substantially 7 KHz.

13. Apparatus according to any of claims 9 to 12, wherein the low frequency in the range 15-30 Hz.

14. Apparatus according to claim 13, wherein the relatively low frequency is substantially 25 Hz.

15. Apparatus according to any of claims 9 to 14, wherein the waveform has a duty cycle of substantially 50%.

16. Apparatus according to any of claims 9 to 15, wherein each high frequency pulse has a duration in the range 1-5 ms, preferably substantially 2.5 ms.

17. A method of at least stunning an animal, the method comprising generating an electrical waveform using a method according to any of claims 1 to 8; and applying the waveform to the body of an animal.

18. A method according to claim 17, wherein the waveform is applied to the head only of the animal.

19. Apparatus for at least stunning an animal, the apparatus comprising electrical waveform generating apparatus according to any of claims 9 to 16; and a set of electrodes connected to the electrical waveform generating apparatus for positioning on the body of an animal to convey an electrical waveform into the animal's body.

20. Apparatus according to claim 19, wherein the electrodes are adapted to be placed on the animal's head.

# Fig.1.

MAINS
240 VOLTS

1  2  4  6  5  3  7  9  8

# Fig.2.

LOW FREQUENCY COMPONENT  25 HZ

0
VOLTS

11  11  10  11  10  11  10  11  10

# Fig. 3.

HIGH FREQUENCY STUN KILL WAVEFORM

10 - 20 KHz
(HIGH FREQUENCY COMPONENT)

30 MSEC
(LOW FREQUENCY COMPONENT)

EP 0 522 818 A1

European Patent
Office

**EUROPEAN SEARCH REPORT**

Application Number

EP    92 30 6198

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,A | EP-A-0 307 031 (LAMBOOY)<br>* column 3, line 46 - line 55; figure *<br>--- | 1 | H05C1/06<br>A22B3/06 |
| D,A | US-A-3 012 271 (MORSE)<br>* column 7, line 62 - line 73; figure 6 *<br>----- | 1 | |

TECHNICAL FIELDS
SEARCHED (Int. Cl.5 )

H05C
A22B

The present search report has been drawn up for all claims

| Place of search | Date of completion of the search | Examiner |
|---|---|---|
| THE HAGUE | 02 OCTOBER 1992 | BIJN E.A. |